**Europäisches Patentamt**

**European Patent Office**

**Office européen des brevets**

(19)

(11) Veröffentlichungsnummer : **0 007 055**
**B1**

(12) **EUROPÄISCHE PATENTSCHRIFT**

(45) Veröffentlichungstag der Patentschrift :
21.10.81

(51) Int. Cl.³ : **B 23 K 1/04**, B 23 K 35/28

(21) Anmeldenummer : 79102231.2

(22) Anmeldetag : 03.07.79

(54) Verfahren zum Befestigen von Kabeln an der Oberfläche von radtragenden Gleiselementen.

(30) Priorität : 13.07.78 DE 2830721

(43) Veröffentlichungstag der Anmeldung :
23.01.80 (Patentblatt 80/02)

(45) Bekanntmachung des Hinweises auf die Patenterteilung : 21.10.81 Patentblatt 81/42

(84) Benannte Vertragsstaaten :
AT CH DE FR GB IT NL

(56) Entgegenhaltungen :
DE - A - 1 440 668
DE - A - 1 577 016
DE - B - 1 016 096
DE - B - 2 333 143
US - A - 2 893 640

(73) Patentinhaber : Elektro-Thermit GmbH
Gerlingstrasse 65
D-4300 Essen (DE)

(72) Erfinder : Guntermann, Hans, Dr.
Augener Strasse 94
D-4300 Essen (DE)

(74) Vertreter : Perret, Georg, Dr.
Th. Goldschmidt AG Patentabteilung Goldschmidtstrasse 100
D-4300 Essen (DE)

EP 0 007 055 B1

### Verfahren zum Befestigen von Kabeln an der Oberfläche von radtragenden Gleiselementen

Die Erfindung betrifft ein Verfahren zum Befestigen von Kabeln an der Oberfläche von radtragenden Gleiselementen, insbesondere Schienen, wobei eine Unterlagsplatte, auf der das Kabel angeordnet ist, mittels eines Lotes mit der Oberfläche des Gleiselementes fest verbunden wird, die Schmelztemperatur des Lotes unterhalb der Umwandlungstemperatur des Werkstoffes, aus dem das Gleiselement besteht, liegt, und wobei die zum Aufschmelzen des Lotes benötigte Wärme von einer reagierenden aluminothermischen Masse abgegeben wird.

Für die Herstellung einer elektrisch leitenden Verbindung zwischen einer Schiene und einem elektrischen Leiter aus z.B. Stahl oder Kupfer ist es u.a. aus der Zeitschrift für Eisenbahnwesen und Verkehrstechnik, Glasers Annalen, 99 (1975), 21 bekannt, aluminothermisch erzeugte Metallschmelzen für eine Verbindungsschweißung zu verwenden.

Dieses bekannte aluminothermische Schweißverfahren, das in sehr kurzer Zeit durchgeführt werden kann, hat jedoch den großen Nachteil, daß durch die Aufschmelzung des Schienenwerkstoffs beim Schweißvorgang Gefügeveränderungen im Bereich der Anschweißstelle entstehen, die die Bruchsicherheit der Schiene vermindern. Durch die Aufschmelzung des Schienenwerkstoffes, die mit einer Erwärmung des Werkstückes über die Umwandlungstemperatur hinaus verbunden ist, entstehen durch die beschleunigte Wärmeabfuhr des die Anschweißstelle umgebenden kalten Grundwerkstoffs Härtungsgefüge, die unter allen Umständen vermieden werden sollten. Ferner diffundiert Kupfer in den Grundwerkstoff, womit die bekannten Nachteile verbunden sind. Versuche, die Abkühlung durch Vorwärmen der Anschweißstelle zu verzögern, führten nicht zu einem Erfolg, da dieses Schweißverfahren eine metallisch blanke Oberfläche voraussetzt und eine geringe Oxidation der Oberfläche bereits genügt, um eine ordnungsgemäße Anschweißung zu verhindern.

Den gleichen Nachteil weist autogenes oder elektrisches Schweißen auf, da auch hier Härterisse entstehen können.

Es wurde daher z.B. bei Schienen versucht, solche Verbinder mit Silberlot autogen anzulöten, wobei mit Hilfe einer Flamme die Oberfläche der Schiene erhitzt wurde. Aber auch hier hat sich gezeigt, daß — durch Unachtsamkeit bedingt — örtliche Überhitzungen auftreten können, wodurch schädliche Gefügeausbildungen entstehen.

Aus der US-PS 2 893 640 ist ein Verfahren zur Befestigung der beiden Enden eines Kabels mit zwei Schienenabschnitten bekannt, bei dem an den Enden des Kabels befestigte Unterlagsplatten, welche sich in einem Gießformhohlraum befinden, mit aluminothermisch erzeugter Metallschmelze umgossen werden, wobei durch die hierbei erzeugte Wärme ein zwischen der Unterseite der Unterlagsplatten und der Schienenoberfläche befindliches Lot aufgeschmolzen wird. Nach dem Erstarren des Lotes sind Unterlagsplatte und Schiene fest miteinander verbunden. Die aufzulötende Unterlagsplatte, an welcher das Kabel befestigt ist, soll dabei in ihrer Dicke so bemessen sein, daß genügend Wärme hindurch treten kann, um das Lot aufzuschmelzen, ohne daß aber gleichzeitig das Gefüge des Schienenwerkstoffs verändert wird.

Aus der DE-OS 14 40 668 ist es bekannt, das Lot in Form eines Plättchens anzuordnen.

Von diesem Stand der Technik ausgehend, ist das erfindungsgemäße Verfahren dadurch gekennzeichnet, daß man

a) die Befestigung des Kabels auf der Unterlagsplatte durch Umgießen mit einer aluminothermisch erzeugten Metallschmelze und das Auflöten der Unterlagsplatte auf die Oberfläche des Gleiselementes gleichzeitig in nur einem Arbeitsgang durchführt und

b) ein Lot der Zusammensetzung Ag 39 bis 41 Gew.-%, Cu 18 bis 20 Gew.-%, Cd 18 bis 22 Gew.-%, Rest Zink verwendet.

Das erfindungsgemäße Verfahren weist insbesondere zwei wesentliche Vorteile auf.

So wird die aluminothermisch erzeugte Metallschmelze nicht nur dazu benutzt, die Wärme für den Lötvorgang zu liefern, sondern dient auch dazu, im gleichen Arbeitsgang Unterlagsplatte und Kabel miteinander zu verbinden. Es entfällt somit der nach der US-PS 2 893 640 notwendige Arbeitsschritt der vorherigen Befestigung des Kabels mit der Unterlagsplatte vor dem Lötvorgang. Es kann deshalb an der Baustelle die passende Unterlagsplatte entsprechend dem Schienenprofil in der jeweils günstigsten Form und Abmessung eingesetzt werden. Man ist somit in der Wahl der Unterlagsplatte frei. Sie kann beliebig geformt sein, soll eine Dicke von 1 bis 5 mm haben und aus Stahl bestehen. Unterhalb einer Dicke von 1 mm besteht die Gefahr des Durchschmelzens. Oberhalb einer Dicke von 5 mm kann der Wärmedurchtritt für ein sicheres Aufschmelzen des Lötmetalles zu gering sein. Besonders bewährt haben sich deshalb als Unterlagsplatten Stahlplatten von etwa 2 bis 3 mm Dicke.

Der zweite wesentliche Vorteil des erfindungsgemäßen Verfahrens ist durch die Verwendung eines Lotes der vorgenannten Zusammensetzung gegeben. Der Schmelzbereich eines solchen Lotes liegt bei 595 bis 630 °C, sein Arbeitsbereich somit etwa bei 610 °C. Bei dieser Arbeitstemperatur und der Dauer der thermischen Einwirkung werden schädliche Gefügeveränderungen im Schienenstahl mit Sicherheit verhindert.

Als aluminothermische Masse für die Befestigung des Kabels auf der Unterlagsplatte und zur Erzeugung der für den Lötvorgang benötigten Schmelzwärme wird eine Masse auf Basis Kupferoxid-Aluminium oder Eisenoxid-Aluminium oder Kupferoxid-Eisenoxid-Aluminium verwendet. Insbesondere die kupferenthaltenden, aluminothermisch erzeugten Legierungen gewährleisten optimale elektrische Leitfähigkeit zwischen Schiene und Kabel.

## Ansprüche

1. Verfahren zum Befestigen von Kabeln an der Oberfläche von radtragenden Gleiselementen, insbesondere Schienen, wobei eine Unterlagsplatte, auf der das Kabel angeordnet ist, mittels eines Lotes mit der Oberfläche des Gleiselementes fest verbunden wird, die Schmelztemperatur des Lotes unterhalb der Umwandlungstemperatur des Werkstoffes, aus dem das Gleiselement besteht, liegt, und wobei die zum Aufschmelzen des Lotes benötigte Wärme von einer reagierenden aluminothermischen Masse abgegeben wird, dadurch gekennzeichnet, daß man

a) die Befestigung des Kabels auf der Unterlagsplatte durch Umgießen mit einer aluminothermisch erzeugten Metallschmelze und das Auflöten der Unterlagsplatte auf die Oberfläche des Gleiselementes gleichzeitig in nur einem Arbeitsgang durchführt und

b) ein Lot der Zusammensetzung Ag 39 bis 41 Gew.-%, Cu 18 bis 20 Gew.-%, Cd 18 bis 22 Gew.-%, Rest Zink verwendet.

2. Verfahren nach Anspruch 1, dadurch gekennzeichnet, daß man für die Befestigung des Kabels auf der Unterlagsplatte und zur Erzeugung der für den Lötvorgang benötigten Schmelzwärme eine aluminothermische Masse auf Basis Kupferoxid-Aluminium oder Eisenoxid-Aluminium oder Kupferoxid-Eisenoxid-Aluminium verwendet.

## Claims

1. Process for fixing cables to the surface of wheel-carrying track elements, in particular rails, a bed plate on which the cable is arranged being rigidly joined to the surface of the track element by means of a solder, the melting point of the solder being below the transformation temperature of the material of which the track element consists, and the heat required for melting the solder being supplied by a reacting aluminothermic composition, characterised in that

a) the fixing of the cable to the bed plate, by casting an aluminothermically generated metal melt around it, and the soldering of the bed plate to the surface of the track element are carried out simultaneously in a single working step and

b) the solder used has a composition of 39 to 41 % by weight of Ag, 18 to 20 % by weight of Cu and 18 to 22 % by weight of Cd, the remainder being zinc.

2. Process according to Claim 1, characterised in that an aluminothermic composition based on copper oxide/aluminium or iron oxide/aluminium or copper oxide/iron oxide/aluminium is used for fixing the cable to the bed plate and for generating the heat of fusion required for the soldering process.

## Revendications

1. Procédé de fixation de câbles à la surface d'éléments de voie supportant des roues, en particulier de rails, dans lequel on assemble fermement à la surface de l'élément de voie au moyen d'un métal d'apport une selle sur laquelle est disposé le câble, la température de fusion du métal d'apport étant inférieure à la température de transformation du matériau dont est formé l'élément de voie, la chaleur nécessaire à la fusion du métal d'apport étant fournie par une masse aluminothermique qui réagit, procédé caractérisé par le fait :

a) que l'on effectue simultanément en une seule opération la fixation du câble sur la selle en l'entourant d'un métal fondu par aluminothermie et le brasage de la selle sur la surface de l'élément de voie, et

b) que l'on utilise un métal d'apport comprenant 39 à 41 % en poids d'argent, 18 à 20 % en poids de cuivre, 18 à 22 % en poids de cadmium, le reste étant formé de zinc.

2. Procédé selon la revendication 1, caractérisé par le fait que pour la fixation du câble sur la selle et pour engendrer la chaleur de fusion nécessaire au processus de brasage, on utilise une masse aluminothermique à base d'oxyde de cuivre et d'aluminium, d'oxyde de fer et d'aluminium ou d'oxyde de cuivre, d'oxyde de fer et d'aluminium.